# EUROPEAN PATENT APPLICATION

(11) **EP 0 994 422 A2**
(43) Date of publication of application: **19.04.2000**
(21) Application number: 99308137.1
(22) Date of filing: 15.10.1999
(51) Int. Cl.: G06F 13/42

(54) **Data interfacing apparatus and data transfer method**

(30) Priority: 16.10.1998 JP 29578098
(71) Applicant: SONY CORPORATION, Tokyo 141 (JP)
(72) Inventor: Niwa, Yoshikatu, Sony Corporation, IP Department, Tokyo 141 (JP); Okawa, Sumihiro, Sony Corporation, IP Department, Tokyo 141 (JP); Nakamura, Akira, Sony Corporation, IP Department, Tokyo 141 (JP); Takizuka, Hiroshi Sony Corporation, IP Department, Tokyo 141 (JP); Fujimori, Takahiro, Sony Corporation, IP Depart., Tokyo 141 (JP)
(74) Representative: Turner, James Arthur

(57) **Abstract**

An interfacing device in which speed negotiation can be correctly realized without the necessity of becoming conscious of the real operating speed capability. To this end, the interfacing device includes a speed negotiation processing block 12 for selecting the data transfer speed (operating speed), a speed signal detection block 3A whether or not data received from outside is a speed signal representing the transfer speed. and a speed signal transmission block 3B for transmitting a speed signal based on the information received from the speed negotiation processing block 12. When the speed signal detection block 3A has detected that an operating speed higher than an allowed maximum operating speed has been selected, the speed negotiation processing block 12 again performs negotiation processing as it lowers the maximum operating speed one step each time negotiation processing is performed once or plural times.

## Description

The present invention relates to data interfacing apparatus and data transfer methods.

As an interfacing standard supporting high speed data transfer and real time transfer aimed at multimedia data transfer, there is known an IEEE 1394 high performance serial bus standard, referred to below as IEEE 1394 standard.

The following paragraphs provide an indication of a technical problem to which the present invention is directed and an indication at least in part of a solution provided by embodiments of the present invention.

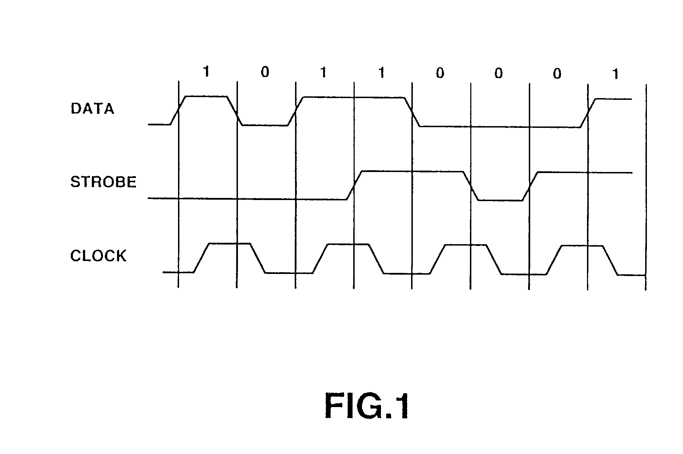

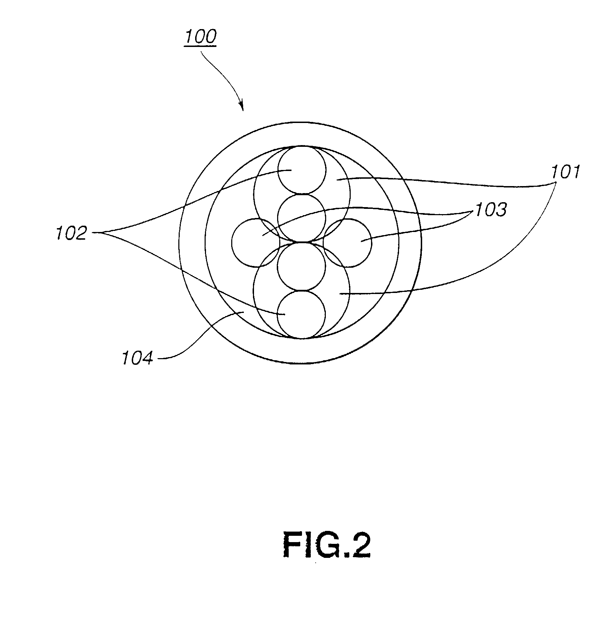

This IEEE 1394 standard provides data transfer speeds at 100 Mbps (98.304 Mbps), 200 Mbps (196.608 Mbps) and 400 Mbps (393.216 Mbps), and prescribes that a 1394 port having an upper order transfer rate shall be compatible with the lower order transfer rate. This renders it possible to permit the data transfer rates of 100 Mbps, 200 Mbps and 400 Mbps to co-exist on the same network. The IEEE 1394 standard adopts a transfer format of the DS-Link (data/strobe link) encoding system in which transfer data is converted into two signals, that is the transfer data and strobes that eke out the signals, and in which these two signals are exclusive-ORed to generate clocks, as shown in Fig. 1. There is also prescribed a cable structure in which two sets of twist pairs (signal lines) 102 shielded by first shield layers 101 and power lines 103 are bundled to form a cable structure which then is shielded by a second shielding layer 104 to give a cable 100, as shown in Fig.2.

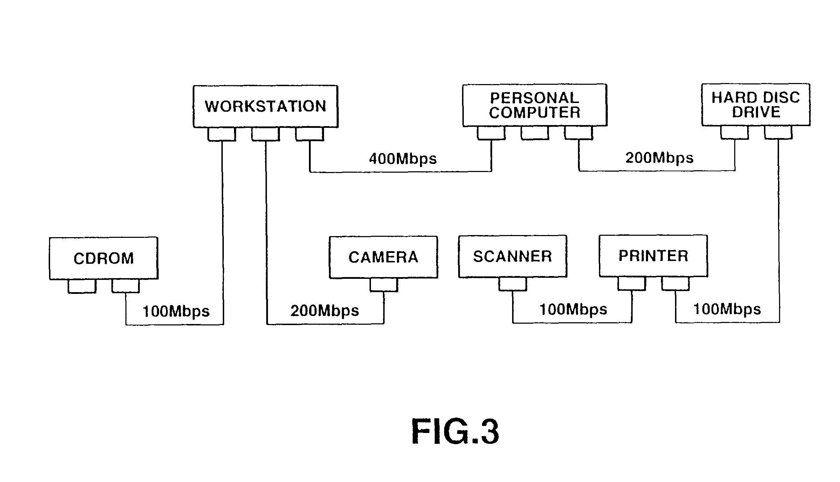

In the IEEE 1394 standard, two sorts of systems, that is the daisy chain and node branching, can be used as a connection system. In the daisy chain system, up to a maximum of 16 nodes of equipments having the 1394 port, with the maximum length between the nodes being 4.5 m. If node branching is also used, such a network can be constructed to which the largest number of nodes permitted by the standard, that is 63 nodes (physical node addresses) can be connected, as shown in Fig.3.

Also, in the IEEE 1394 standard, the above cables can be connected or disconnected when the equipments are in operation, that is in the power up state, such that, at a time point nodes are added or deleted, the network can be re-constructed automatically. At this time, the equipments of the connected nodes can be automatically recognized, whilst the identification or the arrangement ofthe connected equipments are supervised on an interface.

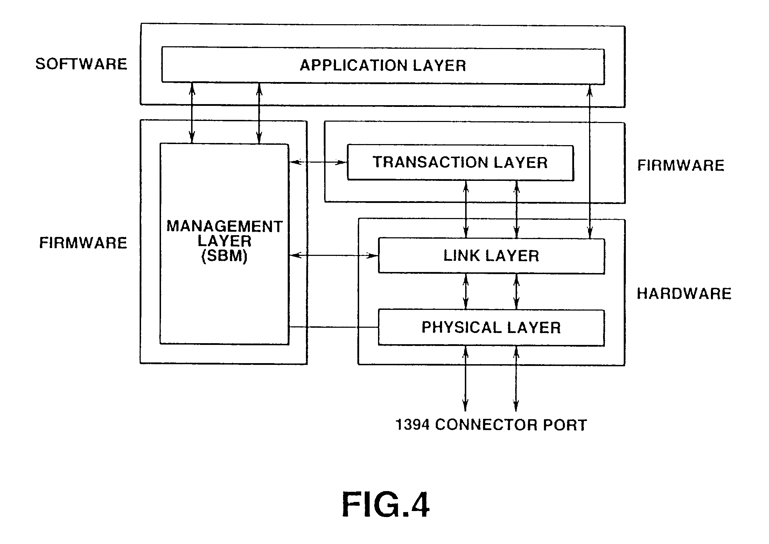

The constituent elements of the interface, conforming to the IEEE 1394 standard, and the protocol architecture, are configured as shown in Fig.4. The interface of the IEEE 1394 standard can be divided into the hardware and the firmware.

The hardware is made up of a physical layer (PHY) and a link layer. The physical layer directly drives the signals of the IEEE 1394 standard. The link layer has an interface between the host interface and the physical interface.

The firmware is constituted by a transaction layer, made up of a management driver performing actual operations for the interface conforming to the IEEE 1394 standard, and a management layer, made up of a driver for network management, conforming to the IEEE 1394 standard, termed a serial bus management (SEM).

The application layer is made up ofa management software interfacing between the software being used by a user and transaction or management layer.

In the IEEE 1394 standard, the transfer operation performed in a network is termed a sub-action. The following two sub-actions, namely an asynchronous transfer mode, termed "asynchronous", and a sync transfer mode, termed "aisochronous", and which guarantees a transfer band, are defined. Each sub-action is divided into three parts, and assumes transfer states, termed "arbitration", "packet transmission" and "acknowledgement". Meanwhile, the "acknowledgement" is omitted in the "aisochronous" mode.

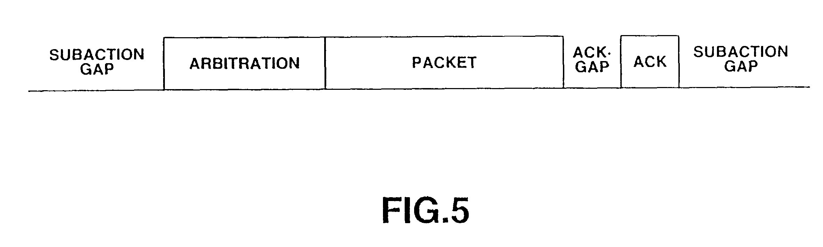

In the aisochronous sub-action, asynchronous transfer is performed. In Fig.5, showing the temporal transition state in the transfer mode, the first sub-action gap indicates the idle state of the bus. The sub-action time gap is monitored to verify whether or not the immediately previous transfer has come to a close and hence whether or new transfer is possible.

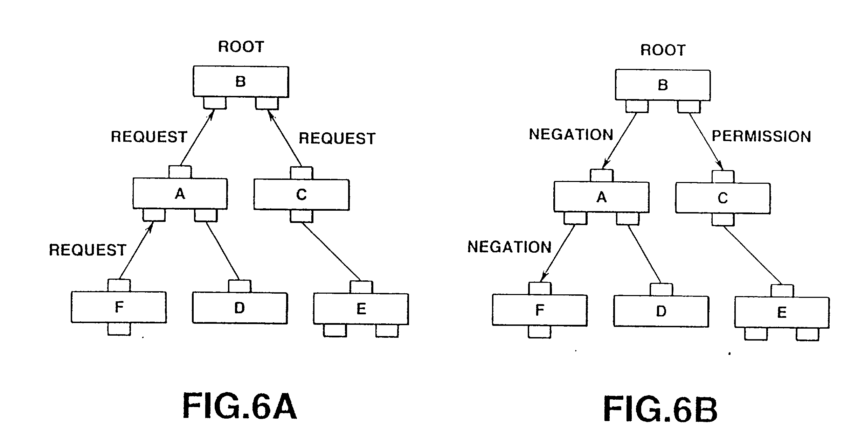

If the idle state continues for longer than a pre-set time, a node desirous of transfer decides that the bus can be used and hence executes arbitration in order to acquire the bus control right. In actuality, judgment as to the bus stop is made by a node B lying at the root, as shown in Figs.6A and 6B. The node which has acquired the bus control right in this arbitration then executes data transfer, that is packet transmission. After the data transfer, the node which has received data executes the replying acknowledgement by returning ACK (return code for confirming the reception) responsive to the received result. By executing the acknowledgement, both nodes can confirm the fact of normal transfer based on the ACK contents.

The sub-action gap state, that is the bus idle state, is subsequently again resumed to repeat the above-described transfer operation.

In the aisochronous sub-action, transfer is basically the same in structure as the asynchronous transfer. However, the aisochronous transfer in the aisochronous sub-action occurs in preference to the asynchronous transfer in the asynchronous sub-action. This sets the transfer mode with the guaranteed transfer band, such as to realize data transfer in real-time.

If real time data is to be aisochronous-transferred at plural nodes, channel IDs for making distinction of the contents need to be attached to the transfer data to receive only needed real-time data.

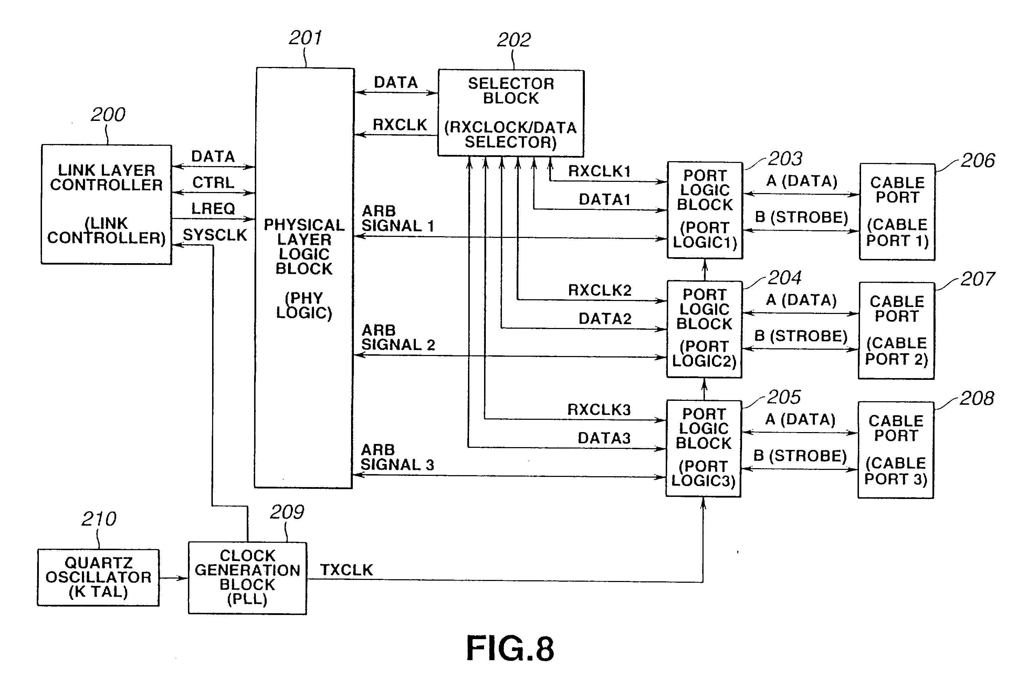

The physical layer in the above-described IEEE 1394 standard includes a physical layer logical block 201 (PHY LOGIC), a selector block (RXCLOCK/DATA SELECTOR) 202, port logic blocks (PORT LOGIC1, PORT LOGIC2 and PORT LOGIC3) 203, 204, 205, respective cable ports (CABLE PORT 1, CABLE PORT 2 AND CABLE PORT 3) 206, 207 and 208, and a clock generating block (PLL) 209, as shown for example in Fig.8.

The physical layer logical block 201 performs I/O control with the link layer in the IEEE 1394 standard and arbitration control. It is connected to a link layer controller (LINK CONTROLLER) 200, while being connected to the selector block 202 and to the respective port logic blocks 203 to 205.

The selector block 202 selects data DATA 1, DATA 2 and DATA 3 and associated reception clocks RXCLK1, RXCLK2 and RXCLK3, received via respective port logic blocks 203 to 205 connected to ports 205 t o207, respectively, and is connected to the physical layer 201 and to the port logic blocks 203 to 205.

In the case of data transmission, the selector block 202 sends packet data DATA, sent from the physical layer logical block 201, to the port logic blocks 203 to 205. In reception, one of sets of the packet data DATA 1, DATA 2 and DATA 3, received via respective port logic blocks 203 to 205, and reception clocks RXCLK1, RXCLK2 and RXCLK3, is selected. For example, the packet data DATA 1, received by the port logic block 203 via cable port 206, and the associated reception clock RXCLK1, are sent to the physical layer logical block 201. The packet data selected by the selector block 202, such as the packet data DATA1, received by the port logic block 203, is written in a FIFO memory in the physical layer logical block 201 by the reception clock RXCLK1. The packet data, written in the FIFO memory, is read out by system clocks SYSCLK afforded by a clock generating block 209.

The port logic block 203 transmits and receives arbitration signals ARB1 and data DATA1, over a cable port 206, and has the function of generating reception clocks RXCLK1 from the data sent via cable port 206 and its strobe signal. In arbitration, this port logic block 203 is fed with an arbitration signal ARB1 from the physical layer logical block 201.

During data transmission, the port logic block 203 converts the packet data DATA1, sent from the physical layer logical block 201 via the selector block 202, into serial data with the transmission clocks TXCLK sent from the clock generating block 209 and transmits the resulting serial data from the cable port 206.

During data reception, this port logic block 203 sends the packet data DATA1, received via the cable port 206, to the physical layer logical block 201, along with the reception clocks RXCLK1. If this port logic block 203 is selected by the selector block 202, the packet data DATA1 is written in the FIFO memory in the physical layer logical block 201.

A port logic block 204 exchanges the arbitration signal ARB2 and data DATA2 via cable port 207, and has the function of generating the reception clock RXCLK2 from data sent via the cable port 207 and its strobe signal. During arbitration, the port logic block 204 is fed with the arbitration signal ARB2 from the physical layer logical block 201.

During data transmission, the port logic block 204 converts the packet data DATA2, sent from the physical layer logical block 201 via the selector block 202, into serial data, by the transmission clock TXCLK afforded by the clock generating block 209, and transmits the generated serial data via cable port 207.

During data reception, this port logic block 204 sends the packet data DATA2, received via the cable port 207, to the physical layer logical block 20, via the selector block 202, along with the reception clock RXCLK2. If the port logic block 204 is selected by the selector block 202, the packet data DATA2 is written by the reception clock RXCLK2 in the FIFO memory in the physical layer logical block 201.

A port logic block 205 exchanges arbitration signal ARB3 and data DATA3, via a cable port 208, and has the function of generating reception clocks RXCLK3 from data sent via cable port 208 and its strobe signal. During arbitration, the port logic block 205 is fed from the physical layer logical block 201.

During data transmission, this port logic block 205 converts the packet data DATA3, sent from the physical layer logical block 201 via the selector block 202, into serial data, with transmission clocks TXCLK, afforded by the clock generating block 209, and transmits the converted serial data from the cable port 208.

During data reception, this port logic block 205 sends the packet data DATA3, received via the cable port 208, along with the reception clock RXCLK3, via the selector block 202 to the physical layer logical block 201. If this port logic block 205 has been selected by the selector block 202, the packet data DATA3 is written by the reception clock RXCLK3 in the FIFO memory within the physical layer logical block 201.

The cable port 206 drives the twist pair cable by a signal transmitted from the port logic block 203, while level-converting the signal sent via the twist pair cable to send the level-converted signal to the port logic block 203.

The cable port 207 drives the twist pair cable by a signal transmitted from the port logic block 204, while level-converting the signal sent via the twist pair cable to send the level-converted signal to the port logic block 204.

The cable port 208 drives the twist pair cable by a signal transmitted from the port logic block 205, while level-converting the signal sent via the twist pair cable to send the level-converted signal to the port logic block 205.

The clock generating block 209 generates system clocks SYSCLK of 49.152 MHz and 98.304 MHz transmission clocks TXCLK from 24.576 MHz clocks afforded by a quartz oscillator (X'TAL) 210.

The arbitration signal in the physical layer has three logical values "1", "0" and "Z", and is generated in accordance with rules shown in the following Tables 1 and 2, while being decoded in accordance with the rule shown in Table 3. Meanwhile, the value "Z" represents the inoperative state of a driver.

Of the two sets of the twist pair lines 202, one TPA/TPA* transmits a strobe signal (Strb_Tx), while receiving a data signal (Data_Rx). The other twist pair line TPB/TPB * transmits data signals (Data_Tx) while receiving a strobe signal (Strb_Rx). The Strb_Tx signal, Data_Tx signal, Strb_Enable signal and the Data_Enable signal are used for generating arbitration signals (Arb_A_Rx, Arb_B_Rx).

**Table 1**

| transmission arbitration signal A (Arb_A_Tx) | driver | | notes |
|---|---|---|---|
| | Strb_Tx | Strb_Enable | |
| Z | - | 0 | TPA driver, inoperative |
| 0 | 0 | 1 | TPA driver, operative; strobe, low |
| 1 | 1 | 1 | TPA driver, operative; strobe, high |

**Table 2**

| transmission arbitration signal B (Arb_B_Tx) | driver | | notes |
|---|---|---|---|
| | Data_Tx | Data_Enable | |
| Z | - | 0 | TPA driver, inoperative |
| 0 | 0 | 1 | TPA driver, operative; strobe, low |
| 1 | 1 | 1 | TPA driver, operative; strobe, low |

**Table 3**

| compared values of received arbitration (Arb_n_Rx) | arbitration signals sent from the port (Arb_n_Tx)' | completed arbitration signal (Arb_n)' | notes |
|---|---|---|---|
| | | | `n=A or B, this Table being valid for both A and B |
| Z | Z | Z | If this port is sending Z, received signal is equal to a signal transmitted by ports at the other end of cable |
| 0 | Z | 0 | |
| 1 | Z | 1 | |
| Z | 0 | 1 | If, when this port is sending 0, comparator receives Z, the other port is sending 1 |
| 0 | 0 | 0 | other port is sending 0 or Z |
| Z | 1 | 1 | other port is sending 0 |
| 1 | 1 | 1 | other port is sending 1 |

In the physical layer, two transmission arbitration signals Arb_A_Tx and Arb_B_Tx are encoded in a line state. These states have different meanings depending on whether the signals are to be sent to a parent node or to a child node, as shown in Table 4.

The parent-child relation in the IEEE 1394 standard is explained. Of the plural nodes, connected to the network, there exist several nodes positioned at ends (leaves). Immediately after bus resetting, each node determines whether or not it is itself a leaf. The decision on whether or not each node is a leaf is given by recognizing how many cables are connected to the leaf in question. That is, such a node having only one port or having plural ports but having only one cable connected thereto becomes a leaf. Each leaf inquires the node to which it is connected (parent node). The node to which the inquiry has been made is connected to the inquiring node and adopts the inquiring node as a child. The parent node further accepts inquiries from ports where the parent-child relation is not fixed. This sets the parent-child relation within the network. The port whose ports in their entirety have become parents becomes the root.

**Table 4**

| arbitration structure | | name of line state | notes |
|---|---|---|---|
| (Arb_A_Tx) | (Arb_B_Tx) | | |
| Z | Z | IDLE | sent to show gap |
| 0 | Z | TX_REQUEST | sent to parent node to request bus |
| | | TY_GRANT | sent to child node if bus is accorded |
| 0 | 1 | TX_PARENT_NOTIF Y | sent to parent candidate node in Tree_ID phase |
| 0 | 1 | TX_DATA_PREFIX | sent before packet data or between connected sub-action packet data |
| 1 | Z | TX_CHILD_NOTIFY | sent to child node to realize PARENT_NOTOFY |
| | | TX_IDENT_DONE | sent to parent node to show that SELF_ID PHASE has come to an end |
| 1 | 0 | TX_IDENT_END | sent on completion of packet transfer |
| 1 | 1 | BUS_RESET | sent to re-construct bus |

The physical layer decodes interpolation arbitration signals Arb_A_Tx and Arb_B_Tx to line state, using the rule shown in the following Table 5:

**Table 5**

| Line State of Arbitration Signals Received by Physical Layer | | | |
|---|---|---|---|
| received arbitration signal | | name of line states | notes |
| (Arb_A_Rx) | (Arb_B_Rx) | | |
| Z | Z | IDLE | PHY of connected neighboring node not operating |
| Z | 0 | RX_PARENT_ NOTOFY | PHY of connected neighboring node is about to be a child node |
| | | RX_REQUEST_ CANCEL | PHY of connected neighboring node abandoned request |
| Z | 1 | RX_IDENT_ DONE | PHY of child node completed self_ID phase |
| 0 | Z | RX_SELF_ID_ GRANT | PHY of parent node accords bus for self_ID |
| | | RX_REQUEST | PHY of child node requests bus |
| 0 | 0 | RX_ROOT_ CONTENTION | PHY of child node and connected neighboring node both are about to be child nodes |
| | | RX_GRANT | PHY of parent node accords bus control |
| 0 | 1 | RX_PARENT_ HANDSHAKE | PHY of parent node understands PARENT_NOTIFY |
| | | RX_DATA_END | PHY of connected neighboring node ends data block sending to free the bus |
| 1 | Z | RX_CHILD_ HANDSHAKE | PHY of connected neighboring node understands TX_CHILD_NOTIFY |
| 1 | 0 | RX_DATA_PRE FIX | PHY of connected neighboring node tries to send packet data or to send data further after end of data block transmission |
| 1 | 1 | BUS_RESET | sent to re-construct bus |

Meanwhile, in the interfacing device of the IEEE 1394 standard, as described above, the transfer method at each data transfer rate in the IEEE 1394 standard, referred to below as the speed and defined as S100: 98.304 Mbps, S200: 196.608 Mbps, S400:393.216 Mbps, is defined in Japanese Laying-Open Patent H-10-164107. However, there has been given no unambiguous definition as to the method for negotiation processing for determining the operational rate for realization of these speeds.

Also, if, in the routine interfacing device, the speed negotiation processing resulted in a failure, its re-try operation falls into an infinite loop, such that the operation has to be repeated endlessly.

On the other hand, if the number of times of the re-try operations is set to a certain value, there are occasions wherein the negotiation processing at the operation enabling speed is not carried out, but the negotiation processing is deemed to have resulted in failure.

Various aspects and features of the present invention are defined in the appended claims.

Embodiments of the present invention can provide an interfacing device for digital serial data in which arbitration of the bus using rights is performed prior to data transfer as in IEEE 1394 standard, wherein the speed negotiation processing can be realized correctly without falling into an erroneous mode, and a method for selecting the data transfer rate.

Embodiments of the present invention can also provide an interfacing device for digital serial data which enables connection, using an optical fiber cable having different speed transfer capability, without the necessity of an operator becoming conscious of the speed capability in the real operation, and a method for selecting the data transfer rate.

Embodiments of the present invention can also provide an interfacing device for digital serial data in which it is possible to apprise the user of the fact that, if the negotiation processing has been carried out, the processing has been carried out at a frequency lower than the maximum operating speed.

Accordingly the present invention provides interfacing device for data for performing negotiation processing, in such a manner that, of plural operating speeds realizing a plurality of pre-set data transfer speeds, the lowermost operating speed is selected in an initial state, with the operating speed being raised stepwise up to a maximum operating speed which is an allowed operating speed, wherein the device includes speed selecting means for selecting the operating speed, speed signal detection means for detecting whether or not data received from an external equipment is a speed signal representing the data transfer speed and speed signal transmitting means for transmitting the speed signal based on the information received from the speed selecting means. The maximum operating speed in the negotiation processing is alterable. The maximum operating speed is altered depending on connecting states to select an operating speed not higher than the maximum operating speed.

Embodiments of the invention relate to digital serial data interfacing apparatus in which arbitration of bus using rights is effected prior to data transfer. Furthermore, embodiments also relate to data transfer rate selection methods employing this interfacing apparatus.

In this interfacing device for digital serial data, since the maximum operating speed is alterable, different operating speeds can be selected depending on connection states.

In another aspect, the present invention provides data transfer speed selecting method for performing negotiation processing, in such a manner that, of plural operating speeds realizing a plurality of pre-set data transfer speeds, the lowermost operating speed is selected in an initial state, with the operating speed being raised stepwise up to a maximum operating speed which is an allowed operating speed, the maximum operating speed in the negotiation processing being alterable, wherein the method includes altering the maximum operating speed depending on connection states; and selecting an operating speed lower than the maximum operating speed.

In this data transfer speed selecting method, since the maximum operating speed is alterable, different operating speeds can be selected depending on connection states.

Also, in the serial data interfacing device, in which the maximum operating speed is alterable, different operating speeds can be selected depending on the occasional connection states without the risk of falling into an endless loop. There is also no possibility that the negotiation processing is deemed to have resulted in a failure.

The invention will now be described by way of example with reference to the accompanying drawings, throughout which like parts are referred to by like references, and in which:

Fig.1 is a timing chart showing the structure of transfer data in the IEEE 1394 standard.

Fig.2 is a schematic view showing the cross-sectional structure of a serial data interfacing device.

Fig.3 shows an illustrative structure of a cable employing the IEEE 1394 standard.

Fig.4 is a block diagram showing constituent elements of an interface conforming to the IEEE 1394 standard and the protocol architecture.

Fig.5 shows packet for asynchronous transfer.

Figs.6A and 6B show the state of acquisition of bus use rights by arbitration.

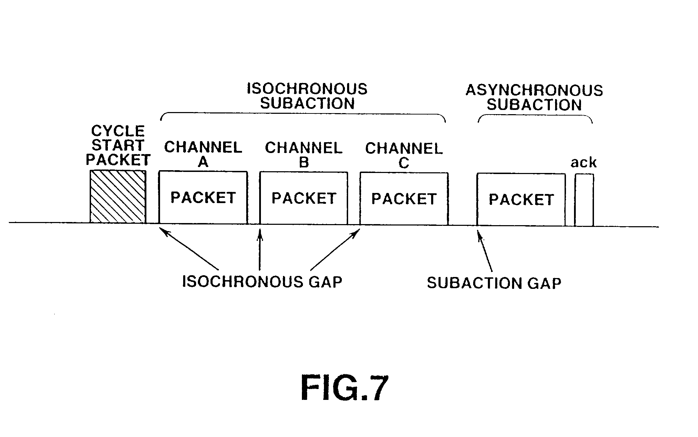

Fig.7 shows a packet for aisochronous transfer.

Fig.8 is a block diagram showing an actual illustrative structure of a physical layer in the IEEE 1394 standard.

Fig.9 is a block diagram showing the structure of an interfacing device capable of long-distance transfer of digital serial data.

Fig.10 is a block diagram showing the structure of another embodiment of the interfacing device.

Fig.11 is a block diagram showing the structure of a further embodiment of the interfacing device.

Fig.12 is a block diagram showing the structure of a digital serial data interfacing device according an embodiment of the present invention.

Fig.13 shows a sequence of steps in performing the speed negotiation processing operation in the interfacing device.

Referring to the drawings, preferred embodiments of the present invention will be explained in detail.

In the IEEE 1394 standard, bus use right arbitration is performed prior to data transfer. In this IEEE 1394 standard, inter-node cable length is extended to enable long-distance transfer. An interfacing device of the IEEE 1394 standard enabling the long-distance transfer (long distance IEEE 1394 standard) is first explained.

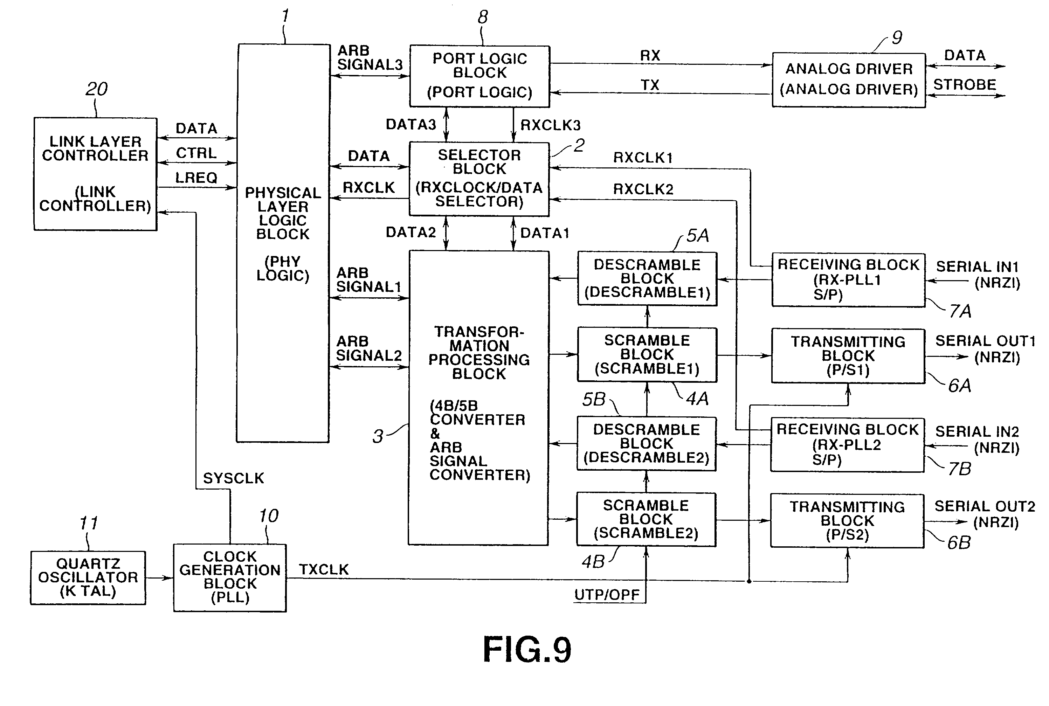

Referring to Fig.9, this interfacing device includes a physical layer logic block (PHY LOGIC) 1, a selector block (RXCLOCK/DATA SELECTOR) 2, a converter block (4B/5B converter & ARB. SIGNAL CONVERTER) 3, scramble blocks (SCRAMBLE1, SCRAMBLE2) 4A, 4B, descramble blocks (DE-SCRAMBLE1, DE-SCRAMBLE2) 5A, 5B, transmission blocks (P/S1, P/S2) 6A, 6B, reception blocks (RX-PLL1 S/P, RX-PLL2 S/P) 7A, 7B, and a port logic block (PORT LOGIC) 8. This interfacing device also includes an analog driver (ANALOG DRIVER) 9 and a clock generator block (PLL) 10.

The physical layer logic block 1 performs I/O control with respect to the link layer in the IEEE 1394 standard and arbitration control, and is connected to a link layer controller (LINK CONTROLLER) 20, while being connected to the selector block 2, converter block 3 and to the port logic block 8.

It is noted that the I/O with respect to the link layer in this physical layer logic block 1 is equivalent to the IEEE 1394 standard, with the communication between the link layer and the physical layer being performed by data signals DATA and control signals CTRL. In addition, a link request signal LREQ is inputted to the physical layer logic block 1 as a request for transmission to the layer.

This physical layer logic block 1 encloses an arbitration controller which controls transmission and/or reception between the arbitration process and the bus. That is, if a packet transmission request is raised, arbitration is started after a suitable gap time. This gap time differs from one arbitration type to another. The physical layer logic block 1 sends the packet data DATA from the link layer to the selector block 2 and sends the arbitration request from the link layer to the converter block 3 and to the port logic block 8.

The selector block 2 selects a set of data DATA1 and DATA2, received via the converter block 3 and its reception clocks RXCLK1, RXCLK2, and data DATA3 received via the port logic block 8 and its reception clocks RXCLK3, and is connected to the physical layer logic block 1, converter block 3, reception blocks 7A, 7B and to the port logic block 8.

In data transmission, this selector block 2 sends the packet data DATA, sent from the physical layer logic block 1, to the converter block 3 and to the port logic block 8. This sends transmission data to the entire transmission ports. In reception, the selector block 2 selects a set of the packet data DATA1, DAT2 and DATA3 and associated reception clocks RXCLK1, RXCLK2 and RXCLK3, received via the converter block 3 or the port logic block 8, to send the selected packet data, for example, DATA1 and its reception clock RXCLK1, to the physical layer logic block 1. The packet data selected by the selector block 2, for example, the packet data DATA1, received by the converter block 3, is written in the FIFO memory in the physical layer logic block 1 by its reception clock RXCLK1 so as to be read out by the system clock SYSCLK accorded by a clock generating block 10.

The converter block 3 operates as a 4 bit/5 bit converter means for data, while operating as arbitration signal converting means for allocating 5-bit symbols other than 5-bit symbols, allocated to the data in the 4 bit/5 bit conversion, to the arbitration signals. The converter block 3 converts the arbitration signals ARB. SIGNAL1 and ARB. SIGNAL2, sent from the physical layer logic block 1, into 1 or 2 5-bit symbols, allocated as shown in Tables 6 and 7, to send the resulting 5-bit symbol(s) to the scramble blocks 4A, 4B. Simultaneously, the converter block 3 converts the 5-bit arbitration signals, sent from the descramble blocks 6A, 6B, into 4-bit signals, which are sent to the physical layer logic block 1.

**Table 6**

| Transmission Symbols Allocated to Arbitration | |
|---|---|
| transmission symbols | states of arbitration |
| 11111 | idle |
| 00100 | TX_REQUEST |
| | TY_GRANT |
| 00101 | TX_PARENT_NOTIFY |
| 11000 10001 | TX_DATA_PREFIX |
| 00111 | TX_CHILD_NOTIFY |
| | TX_IDENY_DONE |
| 01101 | TX_DATA_END |
| 00000 11111 | BUS_RESET |

**Table 7**

| Arbitration Allocated to Received Symbols | | |
|---|---|---|
| 11111 | 11111 | IDLE |
| 00101 | 11111 1 | RX_PARENT_NOTIFY |
| 11111 | 00100 | RX_REQUEST_CANCEL |
| 00111 | 11111 | RX_IDENT_DONE |
| 00100 | 11111 | RX_SELF_ID_GRANT |
| 00100 | 11111 | RX_REQUEST |
| 00101 | 00101 | RX_ROOT_CONTENTION |
| 00100 | 00100 | RX_GRANT |
| 00111 | 00101 | RX_PARENT_HANDSHAKE |
| 01101 | 11111 | RX_DATA_END |
| 11111 | 00111 | RX_CHILD_HANDSHAKE |
| 11000 10001 | 00100 | RX_DATA_PREFIX |
| 11000 10001 | 00111 | RX_DATA_PREFIX |
| 11000 10001 | 11111 | RX_DATA_PREFIX |
| 00000 11111 | (don't care) | BUS_RESET |

That is, in transmission, each one symbol is allocated to each arbitration, excluding TX_DATA_PREFIX and BUS_RESET, shown in Table 6, while two symbols (11000 10001) and two symbols (00000 11111) are allocated to the TX_DATA_PREFIX to the BUS_RESET, respectively. The resulting signals then are transmitted.

In transmitting packet data, the converter block 3 converts the packet data DATA1, DATA2, composed of 4-bit signals, sent via the selector block 2, into 5-bit signals, allocated as shown in Table 8, and routes the 5-bit signals to the scramble blocks 4A, 4B. Simultaneously, the converter block 3 converts the 5-bit reception packet, sent from the descramble blocks 5A, 5B, from the state of the 5-bit signals into 4-bit signals, which are then routed to the selector block 2.

**Table 8**

| Symbols Allocated to Data | | |
|---|---|---|
| hexadecimal | binary | symbols |
| 0 | 0000 | 11110 |
| 1 | 0001 | 01001 |
| 2 | 0010 | 10100 |
| 3 | 0011 | 10101 |
| 4 | 0100 | 01010 |
| 5 | 0101 | 01011 |
| 6 | 0110 | 01110 |
| 7 | 0111 | 01111 |
| 8 | 1000 | 10010 |
| 9 | 1001 | 10011 |
| A | 1010 | 10110 |
| B | 1011 | 10111 |
| C | 1100 | 11010 |
| D | 1101 | 11011 |
| E | 1110 | 11100 |
| F | 1111 | 11101 |

In the 4 bit/5 bit conversion in the converter block 3, 5-bit symbols, containing a large quantity of clock components, are allocated to the packet data DATA1, DATA2. This permits the reception side of the packet data DATA1, DATA2 to generate associated reception clocks RXCLK1, RXCLK2 reliably by PLL from the reception signals.

Also, if IDLE (11111), that is the 5-bit symbol [11111] containing a large volume of the clock information, is allocated to the idle state in the arbitration of the IEEE 1394 standard, the lock state of the PLL of the reception side can be maintained, even in the idle state in the arbitration, thus reliably executing the arbitration.

The scramble blocks 4A, 4B scramble the 5-bit transmission signal, sent from the converter block 3 during packet data transmission, using a shift register, to diminish unneeded radiations in transmitting the 5-bit signal. The 5-bit transmission signals, scrambled by the scramble blocks 4A, 4B, are sent to transmission blocks 6A, 6B.

It is noted that, since the arbitration signals other than IDLE (11111), TX_DATA_PREFIX (11000 10001) and BUS_RESET (00000 11111) are all headed by 2 [0] bits, 2 bit [0]s, found in symbol synchronization following serial/parallel conversion, can be assumed to be the leading end of the symbol and any five bits including the 2 [0] bits can be set as one symbol by way of establishing each arbitration signal. However, BUS_RESET (00000 11111) is established on reception of the consecutive 5 bits, without taking account of the 2 bit [0]s. It is noted that TX_DATA_PREFIX (11000 10011) is detected independently of other arbitration signals. That is, the reception data are shifted one bit to prepare five data strings each being of 10 bits long, and compared to the bit pattern (11000 10001) of TX_DATA_PREFIX. In case of coincidence, reception of TX_DATA_PREFIX is established. Since the packet data is received directly after and next to TX_DATA_PREFIX, symbol synchronization of the packet data can be achieved on reception of TX_DATA_PREFIX.

Also, since TX_DATA_END (01101) is received directly after and in succession to the packet data, it can be detected by the same symbol synchronization as that for TX_DATA_PREFIX and packet data. Meanwhile, the bit pattern (11000 10001) is a pattern not appearing in a data string of packet data converted in Table 8, so that, in case of failure in symbol synchronization, the bit pattern is not detected partway in the packet data, thus precluding mistaken data reception. Moreover, no arbitration signals other than TX_DATA_END or BUS_RESET are detected after detection of TX_DATA_PREFIX.

The descramble blocks 5A, 5B descramble the 5-bit reception signals, sent from the reception blocks 7A, 7B, in meeting with the scrambling performed by the scramble blocks 4A, 4B, to descramble the 5-bit reception signals. These 5-bit reception signals, descrambled by the descramble blocks 5A, 5B, are sent to the converter block 3.

The respective operations of the scramble blocks 4A, 4B and the descramble blocks 5A, 5B can be switched on/off and set to the switched state.

The transmission blocks 6A, 6B convert the 5-bit transmission signals, scrambled by the respective scramble blocks 4A, 4B, from parallel data to serial data, which is further converted from the NRZ (non-return-to-zero) data to the NRZI (non-return-to-zero and invert on ones) data.

The reception blocks 7A, 7B convert the received data from the NRZI data to NRZ data and fron the serial data to the parallel data to send the 5-bit reception signals to the respective descramble blocks 5A, 5B. Also, the reception blocks 7A, 7B generate reception clocks RXCLK1 and RXCLK2 by PLL from the received data to send the generated clocks to the selector block 2.

The port logic block 8 transmits and/or receives the arbitration signals ARB.SIGNAL3, conforming to the physical layer of the IEEE 1394 standard, and data DATA3, and generates reception clocks RXCLK3 from the data sent via analog driver 9 and its strobe signal. In arbitration, the port logic block 8 is fed with the arbitration signals ARB.SIGNAL3 from the physical layer logic block 1.

In data transmission, this port logic block 8 converts the packet data DATA3, sent from the physical layer logic block 1 via selector block 2, into serial data, by the transmission clocks TXCLK afforded by the clock generating block 10, to transmit the resulting serial data via the analog driver 9.

In data reception, the port logic block 8 sends packet data DATA3, received via the analog driver 9, via the selector block 2 to the physical layer logic block 1 along with the reception clock RXCLK3. If the port logic block 8 is selected by the selector block 2, the packet data D3 is written by its reception clock RXCLK3 in the FIFO memory in the physical layer logic block 1.

The clock generating block 10 generates 49.152 MHz system clocks SYSCLK and 98.304 MHz transmission clocks TXCLK from the 24.576 MHz clocks accorded by the quartz oscillator (X'TAL) 11.

With the above-described interfacing device, having the converter block 3 for performing 4 bit/5 bit conversion on the arbitration signals ARB.SIGNALI and ARB.SIGNAL2, it is possible to transmit and/or receive arbitration signals ARB.SIGNAL1, arbitration signals ARB.SIGNAL2 and the packet data DATA1 and DATA 2 via the transmission blocks 6A, 6B and the reception blocks 7A, 7B, as 5-bit code data, via the transmission blocks 6A, 6B and the reception blocks 7A, 7B, to effect long-distance transfer using an optical fiber cable or UTP (unshielded twisted pair) available at low costs. Moreover, in this interfacing device, it is possible to switch between the transmission path by the cable conforming to the IEEE 1394 standard and that by the optical fiber cable or the UTP cable, if the device is further provided with the port logic block 8 and with the analog driver 9 conforming to the physical layer of the IEEE 1394 standard.

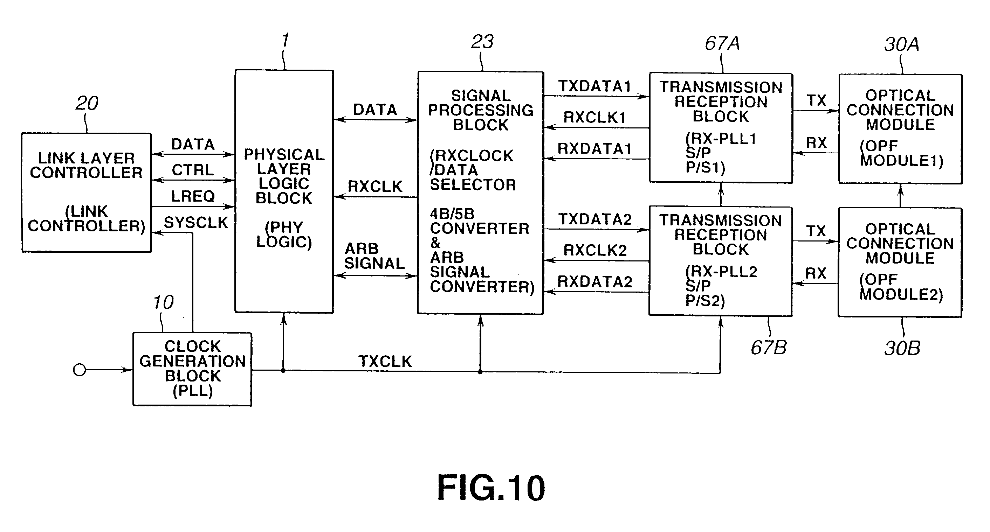

That is, if an optical connection module (OPF MODULE 1, OPF: optical fiber) 30A is connected to a transmitting and/or receiving module 67A, made up of the transmission block 6A and the reception block 7A in the interfacing device shown in Fig.9, as in the interfacing device shown in Fig.10, it is possible to connect the optical fiber cable via this optical connection module 30A. In similar manner, if an optical connection module (OPF MODULE2) 30B is connected to a transmitting and/or receiving module 67B, made up of the transmission block 6B and the reception block 7B, it is possible to connect the optical fiber cable via this optical connection module 30B.

During data transmission, the optical connection modules 30A, 30B convert the NRZI electrical signals from the transmitting and/or receiving blocks 67A, 67B into optical signals which are routed to the optical fiber cable. During data reception, the optical connection modules 30A, 30B convert the optical signals, sent over the optical fiber cable, into NRZI electrical signals, which are routed to the transmitting and/or receiving blocks 67A, 67B.

Meanwhile, the interfacing device, shown in Fig.10, is arranged for connection by the optical fiber cable only, while the port logic block 8 and the analog driver 9, shown in the interfacing device of Fig.9, are omitted. Also, the selector block 2 and the converter block 3 in the interfacing device, shown in Fig.9 are combined into a sole signal processing block 23. Also, if the optical fiber cable is used as a transmission path, no unneeded radiations are produced, so that the scramble blocks 4A, 4B and the descramble blocks 5A, 5B are omitted. Meanwhile, the optical connection modules 30A, 30B are provided for long-distance transfer and are termed PMD (physical media dependent). That is, this PMD operates as an input/output interfacing module with respect to an external equipment.

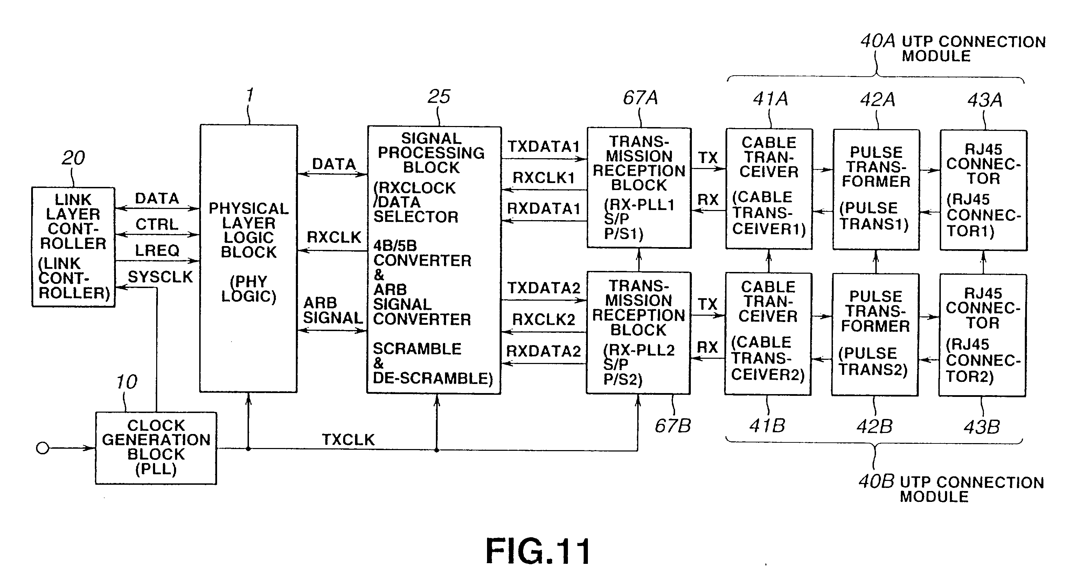

If UTP modules 40A, 40B are exchanged for the optical connection modules 30A, 30B, which are the PMD as in the interfacing device shown in Fig.10, it is possible to connect a UTP cable, as in an interfacing device shown in Fig.11. That is, if a cable transceiver 41A (CABLE TRANSCEIVER 1) is connected to the transmitting and/or receiving block 67A, and a RJ45 connector 43A (RJ45 CONNECTOR 1) is connected to the cable transceiver 41A via a pulse transformer 42A (PULSE TRANS 1), it is possible to connect the UTP cable via the RJ connector 43A. Similarly, by connecting the cable transceiver 41B (CABLE TRANSCEIVER 2) to the transmitting and/or receiving block 67B, and by connecting to the cable transceiver 41B a RJ45 connector 43B (RJ45 CONNECTOR 2) used for connection to the UTP cable, it is possible to connect the UTP cable via the RJ45 connector 43B.

During data transmission, the cable transceivers 41A, 41B convert the NRZI signals from the transmitting and/or receiving blocks 67A, 67B into MLT-3 (Multilevel Transmission 3) signal which is sent to the pulse transformers 42A, 42B. During data reception, the cable transceivers 41A, 41B send MLT-3 signals, sent via the pulse transformers 42A, 42B, into NRZI signals, which are sent to the transmitting and/or receiving blocks 67A, 67B. The role of the pulse transformers 42A, 42B is to shut off the cable transceiver from the cable insofar as the direct current is concerned.

Meanwhile, the interfacing device, shown in Fig.11, is dedicated to the connection to the UTP cable. It is noted that the selector block 2, converter block 3, scramble blocks 4A, 4B and the descramble blocks 5A, 5B constitute a sole signal processing block 25.

In the interfacing device, shown in Fig.9, the optical fiber cable or the UTP cable are connected by exchanging the connection module to effect long-distance transfer of digital serial data, subject to exchange of connection modules. Since the operation of the scramble blocks 4A, 4B and the descramble blocks 5A, 5B can be on/off switched and set in the switched position, the scramble blocks 4A, 4B and the descramble blocks 5A, 5B can be turned on to prohibit unneeded radiations if the UTP cable is to be connected.

The above-described contents are proposed in DAVIC (Digital Audio-Visual Council), Baseline Document 77 Revision 5.0.

An embodiment of the present invention is hereinafter explained. The present embodiment is directed to an interfacing device including a structure which is similar to the interfacing device shown in Figs.9 to 11 and which is configured for correctly performing the speed negotiation processing. Therefore, the parts or components similar to those of the interfacing device shown in Figs.9 to 11 are depicted by the same reference numerals and are not explained specifically.

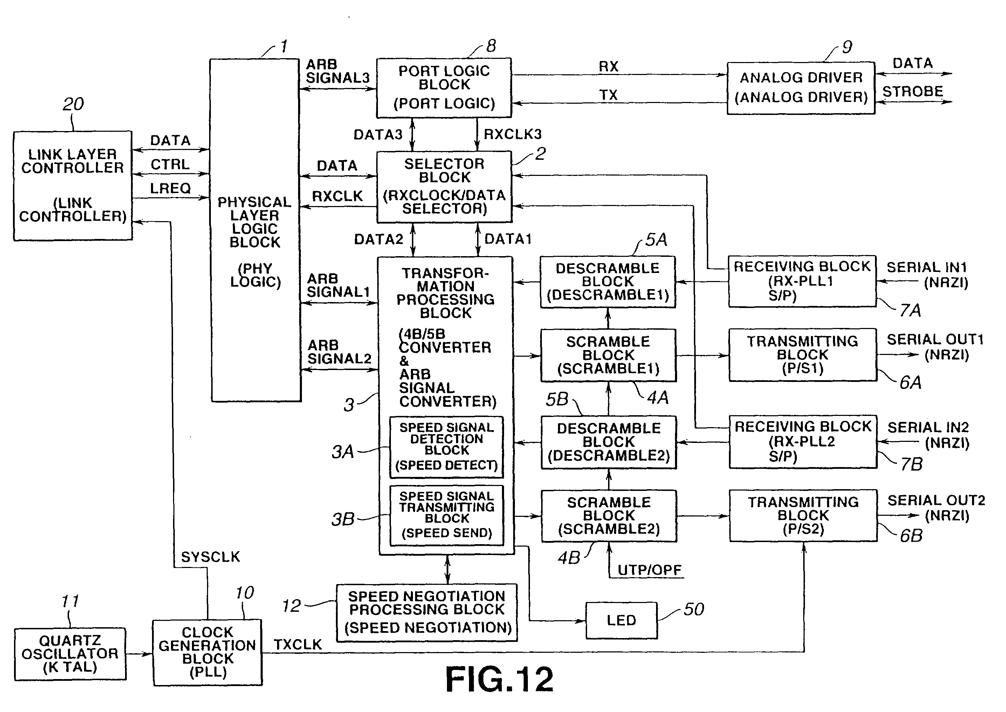

Referring to Fig.12, this interfacing device includes a physical layer logic block 1, a selector block 2, a converter block 3, made up of a speed signal detection block (SPEED DETECT) 3A and a speed signal transmission block (SPEED SEND) 3B, scramble blocks 4A, 4B, descramble blocks 5A, 5B, transmission blocks 6A, 6B, reception blocks 7A, 7B, a port logic block 8, an analog driver 9, a clock generating block 10, a quartz oscillator 11 and a speed negotiation processing block 12 (SPEED NEGOTIATION).

That is, the interfacing device includes, for performing speed negotiation, the speed signal detection block 3A and the speed signal transmission block 3B in the converter block 3, and the speed negotiation processing block 12.

The speed signal detection block 3A is speed signal detection means and discriminates whether or not the data received by the descramble blocks 5A, 5B is the speed signal. The speed signal is the signal indicating the data transfer rate. If the data is the speed signal, the speed signal detection block 3A transmits the information to the speed negotiation processing block 12, which is the speed selection means.

The speed signal transmission block 3B is the speed signal transmitting means, and sends out the speed signal to the scramble blocks 4A, 4B, based on the information received from the speed negotiation processing block 12.

The respective symbols used in the sequence of the speed negotiation processing are explained. In the interfacing device, the speed control symbols, shown in Table 9, are used in the speed negotiation processing operations.

**Table 9**

| Speed Control Symbols | |
|---|---|
| SS0 | no code |
| SS1 | 11000 10001 11001 00111 |
| SS2 | 11000 10001 11001 11001 |
| SSR | 11000 10001 00111 00111 |
| SSA | IDLE (see Table 6) |

The symbol SS1 (11000 10001 11001 00111) means that the speed is to be raised from S100 to S200. The symbol SS2 (11000 10001 11001 11001) means that the speed is to be raised from S200 to S400. The symbol SSR (11000 10001 00111 00111) is used when desired to halt the speed negotiation processing operation, as when the speed is the maximum speed of the node. The symbol SSA (11111) means an IDLE signal, used as a set with the symbol SSR, to confirm the state of mutual symbol recognition. Meanwhile, it is not necessary for the SSA symbol to indicate the IDLE signal since any other unique symbol can be allocated to it. Also, in the IEEE 1394 standard, S100 is the base rate, and is not in need of the negotiation processing, no specified code is allocated tot the symbol SS0.

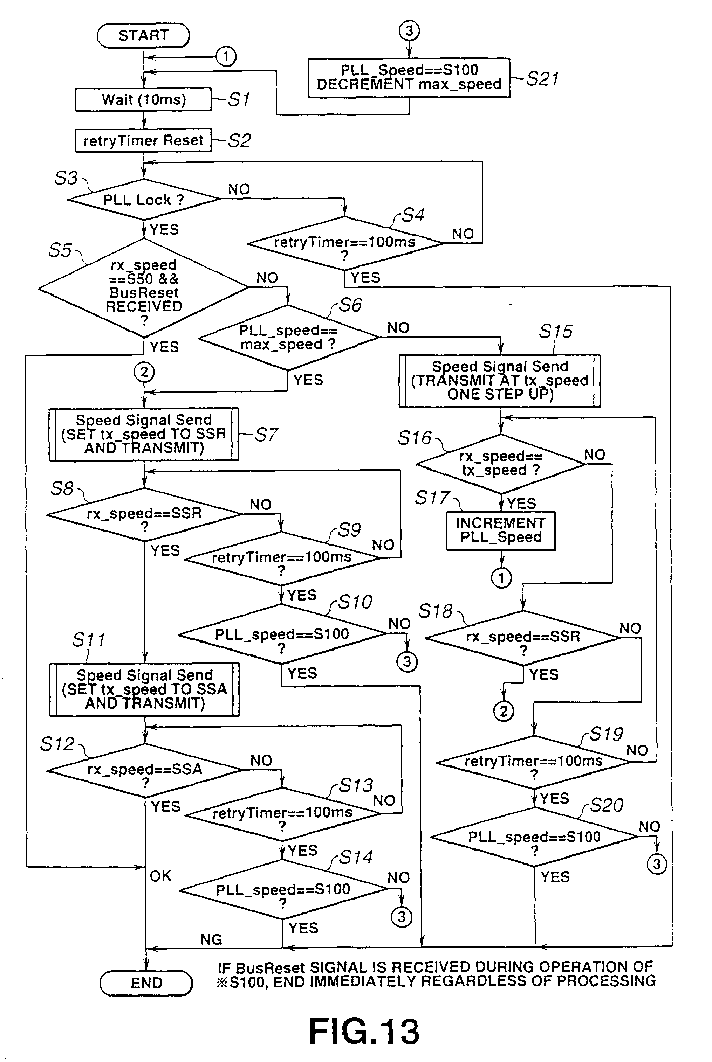

The interfacing device, having the structure as described above, performs the speed negotiation processing by a sequence of operations shown in Fig.13. The speed negotiation processing operation is started as from step S100. The meanings of the variables used in Fig.13 are elucidated in Table 10.

**Table 10**

| Variables Used in Speed Negotiation | |
|---|---|
| tx_speed | indicates transmission speed symbols SS0, SS1, SS2, SSR or SSA |
| rx_speed | indicates reception speed symbols SS0, SS1, SS2, SSR or SSA |
| PLL_speed | current PLL operating frequency S100, S200 or S400 |
| retry timer | timer for retry detection |

If the cable is connected correctly, the speed negotiation processing operation is started, as shown in Fig.13. At step S1, a standby time of, for example, 10 msec, is provided, in order to lock the PLL for reception.

After the stand-by operation, the interfacing device resets the retry timer (RetryTimer) at step S2 and, at step S3, checks whether or not the PLL is locked. It is assumed that the timeout time of the retry timer is set to 100 ms.

If, when the PLL is not locked, the PLL is not locked at step S4 even after the 100 msec time as set on the retry timer has elapsed, a decision is given that the negotiation processing has resulted in a failure to terminate the sequence of operations. If, at step S4, 100 msec as set on the retry timer has not elapsed, the processing as from step S3 is repeated.

If, at step S3, PLL lock has been verified, the reception signal is detected at step S5. This processing is carried out by the speed signal detection block 3A. Specifically, it is checked whether or not the bus resetting signal is being received at the speed of S100. This processing is carried out to detect connection to a node not accommodating the speed negotiation processing, that is a node that is able to accommodate only the speed of S100. If the connection to the node that is able to accommodate only the speed of S100 is detected, the sequence of operations is terminated without performing the speed negotiation processing. Meanwhile, if the operation is at the speed of S100, it cannot be determined with which processing timing the bus resetting signal is received. Therefore, this reception signal is detected at all times if the operation is at the speed S100.

If the bus reset signal has not been received in the initial reception signal detection, processing transfers to step S6 to compare the current operating speed (PLL_speed) to the maximum operating speed (max_speed). If the current operating speed is the maximum operating speed, processing transfers to step S7 and following steps to perform a sequence of operations for carrying out the negotiation processing at this sped. Conversely, if the current operating speed is not the maximum operating speed, processing transfers to step S15 and the following steps to raise the operating speed by one step.

First, if the current operating speed is the maximum operating speed, transmission of the SSR signal is commanded from the speed negotiation processing block 12 to the speed signal transmission block 3B to try to halt the speed negotiation processing. If the counterpart node has replied to the transmitted SSR signal, the SSR signal is transmitted from the counterpart node, as at step S8, thus performing mutual recognition. If the SSR signal from the counterpart node cannot be received, the block awaits until the retry timer setting of 100 msec times out to confirm the possible presence of the SSR signal. If the SSR signal has been received during this standby time, the processing transfers to step S11. If the SSR signal has not been received during this standby time, the speed negotiation processing has failed and the sequence of processing operations is terminated. Although it is checked at step S10 whether or not the current operational speed is S100, the sequence of operations comes to a close because here the first processing is at issue.

If the SSR signal is received, and the speed negotiation processing operation has been confirmed to have come to a close, ACK to that effect is transmitted. This ACK confirming operation occurs by transmission and/or reception ofthe SSA signal by the transmission and/or reception processing of the SSR signal as described above. That is, at step S11, transmission of SSA signals is commanded from the speed negotiation processing block 12 to the speed signal transmission block 3B to try to halt the speed negotiation processing. If the counterpart node has replied to the transmitted SSA signal, the SSA signal from the counterpart node is transmitted, as at step Speed negotiation processing block 12, thus assuring mutual recognition. If the SSA signal from the counterpart node cannot be received, the block awaits until 100 msec as set on the retry timer times out to confirm possible presence of the reception of the SSA signal. If the SSA signal is received during this standby time, the speed negotiation processing is terminated. If the SSA signal is not received, the negotiation processing results in failure so that the sequence of processing comes to a close. Although it is checked at step S14 whether or not the current operating speed is S100, the sequence of operations comes to a close because here the first processing is at issue. By the above sequence of operations, the ACK recognition is carried out to terminate the sequence of processing operations.

If, in the interfacing device, the current operating speed is verified at step S6 not to be the maximum operating speed, it is attempted at step S16 to raiser the operating speed by one step.

That is, if it is commanded at step S15 to send the SS1 signal from the speed negotiation processing block 12 to the speed signal transmission block 3B, it becomes possible to perform processing for raising the speed from S100 to S200. If the SS2 signal is transmitted, it becomes possible to perform processing for raising the speed from S200 to S400. It is assumed here that the SS1 signal is being transmitted, since the present process is the extension of the above-described process.

If, at step S15, the SS1 signal is transmitted to the counterpart node to request speedup, the counterpart node sends back a symbol. If the counterpart node agrees to the speedup, it transmits the SS1 signal. Thus, at step S15, it is checked whether or not the received signal is SS1. If the received signal is SS1, that is if both nodes transits the SS1 signal, negotiation processing from S100 to S200 is valid.

In this case, the operating speed is increased at step S17 to S200, that is, the frequency of the frequency of the reciprocal transmission symbols is switched to a desired value, and the processing as from step S1 is again executed to repeat the speed negotiation processing.

If the counterpart node is not agreeable to the speedup, for example, the current operating speed of this side node is not the maximum operating node, with the speed of the counterpart node being the maximum operating speed, it is necessary to stop the negotiation processing. In such case, a SSR signal is sent from the counterpart node. Thus, if it is found at step S16 that the signal sent from the counterpart node differs from the SI signal sent from this side node, it is checked at step S18 whether or not the signal is a SSR signal. If the signal is decided to be the SSR signal, the processing as from the step S7 is performed to halt the negotiation processing. If the signal is decided not to be the SSR signal, it is checked at step S19 whether or not the retry timer reaches 100 msec. If 100 msec is not surpassed, the processing as from step S16 is repeated. If 100 msec has been surpassed, the negotiation processing is deemed to have failed and the sequence of operations is terminated. At step S20, it is verified whether or not the operating speed is S100. Since here the operating speed is unchanged at S100, the sequence of operations is terminated.

That is, if, with the operating speed at S100, the negotiation processing has failed, it is the failure caused by the base rate. Therefore, the negotiation processing is not performed again and the sequence of operations is terminated. If the speed is other than S100, processing transfers to step S21 where the operating speed is set to S100 and the maximum operating speed is lowered by one step to perform the re-try operation as from step S1.

In the following explanation, it is assumed that the negotiation processing at the maximum operating speed of S400 has failed and the maximum operating speed has to be lowered to S200.

In this case, the operation at 200 has occurred normally before the negotiation processing is attempted at the maximum operating speed at S400. Therefore, if the maximum operating speed is lowered from S400 to S200, negotiation processing can be carried out at a speed at which the transmission and/or reception could be carried out in the previous negotiation processing. However, if, for some reason, the negotiation processing at S200 in the re-try operation has not been made, the maximum operating speed is further lowered to S100 to perform the retry operation. If nevertheless the processing has failed, the transmission and/or reception at the base rate cannot be established and hence the negotiation processing has resulted in failure. Therefore, the sequence of operations is terminated.

Thus, in the interfacing device, the maximum operating speed is alterable, such that it is possible to lower the maximum operating speed one step to perform the retry operation so that negotiation processing can be performed at the speed at which the transmission and/or reception was established at the previous negotiation processing. If the processing has failed, the failure is ultimately at S100 so that the negotiation processing can be terminated. Thus, there is no risk of the retry operation falling into an endless loop.

Since the number of times of the retry operation is not set, negotiation processing at the operation enabling speed is not performed, while negotiation processing is not deemed to have resulted in failure.

Moreover, since the maximum operating speed is alterable, negotiation processing can be performed at the operating speed matched to the maximum operating speed of the PMD.

If moreover an indicator is provided for producing flickering of the LED 50 as shown in Fig.12 if negotiation processing has not been carried out at the maximum operating speed of the physical layer, the user may be apprised of the fact that the operating speed is not the maximum operating speed of the node.

The present invention is not limited to the above-described specified embodiments. For example, maximum operating speed can be lowered each time plural retry operations are performed, instead of lowering the maximum operating speed by one step every retry operation.

The present invention may also be applied to the interfacing device having PMDs as shown in Figs.10 and 11. Specifically, the present invention may be flexibly applied to a variety of interfacing devices with different PMDs, such as optical connection modules or UTP connection modules.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An interfacing device for data for performing negotiation processing in such a manner that, of plural operating speeds realizing a plurality of pre-set data transfer speeds, the lowermost operating speed is selected in an initial state, with the operating speed being raised stepwise up to a maximum operating speed which is an allowed operating speed, comprising:
speed selecting means for selecting said operating speed;
speed signal detection means for detecting whether or not data received from an external equipment is a speed signal representing said data transfer speed; and
speed signal transmitting means for transmitting said speed signal based on the information received from said speed selecting means;
the maximum operating speed in said negotiation processing being alterable;
said maximum operating speed being altered depending on connecting states to select an operating speed not higher than said maximum operating speed.

2. The interfacing device for data according to claim 1 wherein, if said speed signal selecting means has detected selection of an operating speed higher than said maximum operating speed, said speed selecting means lowers said maximum operating speed one step each time said negotiation processing is performed.

3. The interfacing device for data according to claim 1 further comprising:
an input/output interface module for data inputting/outputting for said external equipment; wherein
if the maximum operating speed allowed by a physical layer is higher than the maximum operating speed allowed by said input/output interface module, said speed selection means sets the maximum operating speed of said physical layer to the maximum operating speed allowed by said input/output interface module.

4. The interfacing device for data according to claim 1 further comprising:
detection means for detecting that an operating speed lower than said maximum operating speed has been selected and data transfer has been executed at the selected operating speed.

5. The interfacing device for data according to claim 4 further comprising:
notifying means for notifying that, if said detection means has detected that an operating speed lower than said maximum operating speed has been selected and data transfer has been executed at the selected operating speed, the operating speed lower than said maximum operating speed has been selected.

6. The interfacing device for data according to claim 5 wherein
said notifying means is an LED.

7. The interfacing device for data according to claim 1 wherein
said operating speed is selected before bus resetting.

8. The interfacing device for data according to claim 1 constituting a physical layer for a link layer conforming to the IEEE 1394 high performance serial bus standard.

9. The interfacing device for data according to claim 1 wherein
said data is digital serial data.

10. A data transfer speed selecting method for performing negotiation processing in such a manner that, of plural operating speeds realizing a plurality of pre-set data transfer speeds, the lowermost operating speed is selected in an initial state, with the operating speed being raised stepwise up to a maximum operating speed which is an allowed operating speed, said maximum operating speed in said negotiation processing being alterable, comprising:
altering said maximum operating speed depending on connection states; and
selecting an operating speed lower than said maximum operating speed.

11. The data transfer speed selecting method according to claim 10 wherein
if it is detected that selection of an operating speed higher than said maximum operating speed has been made, said maximum operating speed is lowered one step each time said negotiation processing is effected once or plural times.

12. The data transfer speed selecting method according to claim 10 wherein
if the maximum operating speed allowed by a physical layer is higher than the maximum operating speed allowed by an input/output interface module responsible for data inputting/outputting with respect to an eternal equipment, said maximum operating speed of said physical layer is set to the maximum operating speed allowed by said input/output interface module.

13. The data transfer speed selecting method according to claim 10 wherein
it is detected that an operating speed lower than said maximum operating speed has been selected and data transfer has been executed at the selected operating speed.

14. The data transfer speed selecting method according to claim 10 further comprising:
notifying that, if it is detected that the operating speed lower than said maximum operating speed is selected and data transfer is effected at said selected operating speed, the operating speed lower than said maximum operating speed has been selected.

15. The data transfer speed selecting method according to claim 14 wherein the selection of the operating speed lower than said maximum operating speed is notified by an LED.

16. The data transfer speed selecting method according to claim 10 wherein
said operating speed is selected before bus resetting.

17. The data transfer speed selecting method according to claim 10 wherein
said negotiation processing is performed on a physical layer for a link layer conforming to the IEEE 1394 high performance serial bus standard.

18. The data transfer speed selecting method according to claim 10 wherein said data is digital serial data.
